# EUROPÄISCHE PATENTANMELDUNG

(11) **EP 1 148 425 A2**
(43) Veröffentlichungstag der Anmeldung: **24.10.2001**
(21) Anmeldenummer: 01109163.4
(22) Anmeldetag: 12.04.2001
(51) Int. Cl.: G06F 13/40

(54) **Datenverarbeitungseinrichtung mit einer Schaltungsanordnung zur Verbindung eines ersten Kommunikationsbusses mit einem zweiten Kommunikationsbus**

(30) Priorität: 18.04.2000 DE 10019239
(71) Anmelder: Fujitsu Siemens Computers GmbH, 81739 München (DE)
(72) Erfinder: Demharter, Nikolaus, 91077 Dormitz (DE); Knöpfle, Andreas, 86424 Dinkelscherben (DE)
(74) Vertreter: Epping Hermann & Fischer

(57) **Zusammenfassung**

Die vorliegende Erfindung betrifft eine Datenverarbeitungseinrichtung mit einer ersten Schaltungsanordnung (1), die einen Kommunikationsbus (2) mit einem zweiten Kommunikationsbus (3) verbindet. Die erste Schaltungsanordnung (1) ist dabei der Busmaste des ersten Kommunikationsbusses (2). Weiter ist eine zweite Schaltungsanordnung (4) mit dem ersten Kommunikationsbus (2) verbunden. Durch die Verwendung eines Wartesignals (11), das in der zweiten Schaltungsanordnung (4) generiert wird und an die erste Schaltungsanordnung (1) übertragen wird, ist es möglich, einen Lese- bzw. Schreibzugriff auf den ersten Kommunikationsbus (2) auf eine beliebige Anzahl von Taktzyklen auszudehnen.

## Beschreibung

Die vorliegende Erfindung betrifft eine Datenverarbeitungsanordnung mit einer Schaltungsanordnung, die einen ersten Kommunikationsbus mit einem zweiten Kommunikationsbus verbindet, wobei eine zweite Schaltungsanordnung ebenfalls mit dem ersten Kommunikationsbus verbunden ist.

Datenverarbeitungseinrichtungen umfassen unterschiedliche Einheiten wie CPU (Central Processing Unit), Speicher, Display, Festplattenkontroller etc., die über Kommunikationsbusse miteinander verbunden sind und Daten austauschen. Oftmals werden mehrere, unterschiedliche Kommunikationsbusse in einer Datenverarbeitungseinrichtung angeordnet, die sich durch ihre Übertragungsgeschwindigkeit, Busarchitektur, Universalität bzw. Spezialisierung unterscheiden.

Zur Verbindung eines ersten Kommunikationsbusses mit einem zweiten Kommunikationsbus wird im allgemeinen eine sogenannte Bridge verwendet. Die Bridge kann z.B. als Busmaster für einen der Kommunikationsbusse dienen. Das bedeutet, daß die Bridge die Lese- und Schreibrechte auf dem Bus an die übrigen angeschlossenen Komponenten dieses Kommunikationsbusses zuweist.

Zum Beispiel ist nach dem spezifischen Protokoll eines Kommunikationsbusses ein Lese- bzw. Schreibzugriff immer auf die Zeitdauer von zwei Takten eines Taktsignals festgelegt. Im ersten Takt werden dabei die Adress- und Zyklusinformationen bereitgestellt und im zweiten Takt die Daten übertragen, wobei die Adress- und Zyklusinformationen stabil bleiben. Problematisch wird dieses starre Busprotokoll, wenn die Daten nicht innerhalb von zwei Taktzyklen von der an dem Kommunikationsbus angeschlossenen Komponente bereitgestellt werden. Eine Lösung dieses Problems war bisher dadurch möglich, daß das nicht buskonforme Modul an einen anderen Bus angeschlossen wird. Diese Lösung erfordert allerdings zusätzlichen Entwicklungsaufwand, da in diesem Fall ein spezielles Interface für jedes Modul entwickelt werden muß. Eine weitere Lösungsmöglichkeit besteht in der Modifikation der Bridge in der Weise, daß in Abhängigkeit von der angesprochenen Adresse eine vorher festgelegte Anzahl von Taktzyklen gewartet wird, bis die Daten eingelesen werden. Der Nachteil liegt hier einerseits darin, daß die Anzahl der zu wartenden Taktzyklen starr ist und nicht an veränderbare Umstände angepaßt werden kann. Der zweite Nachteil liegt darin, daß die Bridge für jedes Peripheriemodul separat angepaßt werden muß, was die Wiederverwendbarkeit der Bridge sehr stark einschränkt.

Es ist die Aufgabe der Erfindung eine Datenverarbeitungseinrichtung mit einem Kommunikationsbus und einem Verfahren zu ihrem Betrieb anzugeben, wobei eine Schaltungsanordnung an den Kommunikationsbus angeschlossen werden kann, die Daten nach einer beliebigen Zeitspanne zur Verfügung stellt.

Erfindungsgemäß wird die gestellte Aufgabe durch eine Datenverarbeitungseinrichtung gelöst mit:
- einer ersten Schaltungsanordnung, die einen ersten Kommunikationsbus mit einem zweiten Kommunikationsbus verbindet und der Busmaste des ersten Kommunikationsbusses ist;
- einer zweiten Schaltungsanordnung, die mit dem ersten Kommunikationsbus verbunden ist;
- wobei die zweite Schaltungsanordnung einen ersten Ausgang aufweist, der mit einem Eingang der ersten Schaltungsanordnung verbunden ist.

Die erfindungsgemäße Anordnung enthält eine Bridge, die einen ersten Kommunikationsbus mit einem zweiten Kommunikationsbus verbindet. An dem ersten Kommunikationsbus können dabei weitere Module angeschlossen werden, wobei auch der Anschluß von Modulen ermöglicht werden soll, die nicht konform mit dem ersten Kommunikationsbus arbeiten. Dies wird dadurch erreicht, daß von einem ersten Ausgang der zweiten Schaltungsanordnung ein Signal an einen Eingang der ersten Schaltungsanordnung übermittelt wird. Bei diesem Signal handelt es sich beispielsweise um einen Wait-Signal. Die erste Schaltungsanordnung (Bridge), die z.B. als Busmaster arbeitet, kann so in einen Zustand versetzt werden, in dem sie eine beliebige Anzahl von Taktzyklen auf die Daten der zweiten Schaltungsanordnung wartet. Ein Vorteil dieser Anordnung besteht z.B. darin, daß nun an den ersten Kommunikationsbus sowohl kommunikationsbuskonforme Module angeschlossen werden können, die kein Wait-Signal benötigen, als auch Module, die nicht kommunikationsbuskonform sind und daher zusätzlich ein Wait-Signal an die Bridge übermitteln.

Eine Weiterbildung der erfindungsgemäßen Anordnung sieht vor, daß eine dritte Schaltungsanordnung angeordnet ist, die einen zweiten Ausgang aufweist, der mit dem ersten Ausgang mittels einer logischen ODER-Funktion verknüpft ist, wobei der Ausgang der ODER-Funktion mit dem Eingang der ersten Schaltungsanordnung verbunden ist. Vorteilhaft an dieser Schaltungsanordnung ist, daß mehr als ein nicht buskonformes Modul an den ersten Kommunikationsbus angeschlossen werden kann. Durch die ODER-Verknüpfung wird erreicht, daß sowohl das von der zweiten Schaltungsanordnung als auch das von der dritten Schaltungsanordnung ausgesendete Wait-Signal ODER-verknüpft wird und der Ausgang dieser ODER-Verknüpfung an die Bridge angeschlossen ist, so daß die Bridge in der Lage ist, auf jedes an den ersten Kommunikationsbus angeschlossene Modul zu warten. Die ODER-Verknüpfung ist nicht auf zwei Module beschränkt, hier kann eine beliebige Anzahl von Modulen mit Wait-Signalen ODER-verknüpft werden, wobei das Ergebnis der ODER-Verknüpfung an die Bridge übermittelt wird.

Eine weitere Ausgestaltung der erfindungsgemäßen Anordnung sieht vor, daß die erste Schaltungsanordnung und die zweite Schaltungsanordnung separate integrierte Schalungen sind, die von dem ersten Kommunikationsbus verbunden werden, der auf einem Systembord angeordnet ist. Durch die Verwendung von separaten integrierten Schaltungen ist es möglich, einen modularen Aufbau auf einem Systembord zu realisieren, bei dem eine beliebige Anzahl von Modulen z.B. über Interface-Schaltungen an den ersten Kommunikationsbus angeschlossen werden kann.

Eine weitere Ausgestaltung der erfindungsgemäßen Anordnung sieht vor, daß die erste Schaltungsanordnung und die zweite Schaltungsanordnung in einer gemeinsamen integrierten Schaltung angeordnet sind. Die Realisierung der ersten integrierten Schaltung (Bridge) und der zweiten integrierten Schaltung (Interface) auf einem gemeinsamen Chip ermöglicht die kostengünstige Herstellung einer Schaltung, die sowohl die Bridge als auch das Interface umfaßt.

Mit Bezug auf das Verfahren wird die Aufgabe gelöst durch ein Verfahren zum Betrieb einer Datenverarbeitungseinrichtung mit den Schritten:
Bereitstellen einer ersten Schaltungsanordnung, die einen ersten Kommunikationsbus mit einem zweiten Kommunikationsbus verbindet und der Busmaste des ersten Kommunikationsbusses ist, wobei eine zweite Schaltungsanordnung mit dem Kommunikationsbus verbunden ist, die einen Ausgang aufweist, der mit einem Eingang der ersten Schaltungsanordnung verbunden ist; Erzeugen eines Wartesignals in der zweite Schaltungsanordnung;
Übermitteln des Wartesignals von der zweiten Schaltungsanordnung an die erste Schaltungsanordnung;
Warten der ersten Schaltungsanordnung bis die zweite Schaltungsanordnung das Wartesignal beendet.

Das erfindungsgemäße Verfahren zum Betrieb einer Schaltungsanordnung ermöglicht durch das Wartesignal das Anschließen von Modulen an den ersten Kommunikationsbus, die erst nach einer verlängerten Wartezeit Daten an die Bridge liefern können.

Eine vorteilhafte Ausgestaltung des erfindungsgemäßen Verfahren sieht vor, daß eine dritte Schaltungsanordnung angeordnet ist, die einen zweiten Ausgang aufweist, der mit dem ersten Ausgang mittels einer logischen ODER-Funktion verknüpft ist, wobei von dem Ausgang der ODER-Verknüpfung ein Wartesignal an den Eingang der ersten Schaltungsanordnung gesendet wird, solange eine der Schaltungsanordnungen ein Wartesignal übermittelt.

Weitere Ausgestaltungen der Erfindung sind in den Unteransprüchen angegeben.

Ausführungsbeispiele der Erfindung werden nachfolgend anhand der Figuren dargestellt und erläutert.

In den Figuren zeigen:
- Figur 1: eine erfindungsgemäße Schaltungsanordnung mit einem Wartesignal;
- Figur 2: ein Timing-Diagram für einen Schreibprozeß;
- Figur 3: ein Timing-Diagram für einen Leseprozeß.

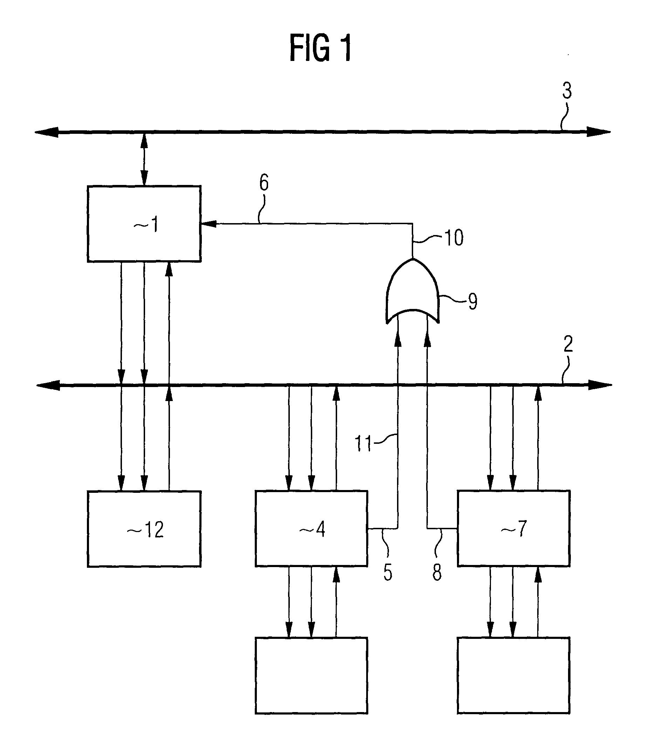

In Figur 1 ist eine erste Schaltungsanordnung 1 dargestellt, die einen ersten Kommunikationsbus 2 mit einem zweiten Kommunikationsbus 3 verbindet. Weiterhin ist mit dem ersten Kommunikationsbus 2 eine zweite Schaltungsanordnung 4 verbunden, die einen Ausgang 5 aufweist. Zusätzlich ist eine dritte Schaltungsanordnung 7 an den ersten Kommunikationsbus 2 angeschlossen, die einen zweiten Ausgang 8 aufweist. Der erste Ausgang 5 und der zweite Ausgang 8 sind mit einer logischen ODER-Funktion 9 verknüpft, deren Ausgang 10 mit einem Eingang 6 der ersten Schaltungsanordnung 1 verbunden ist. Darüber hinaus ist eine buskonforme Schaltungsanordnung 12 an den ersten Kommunikationsbus 2 angeschlossen.

Der Betrieb der in Figur 1 dargestellten Datenverarbeitungseinrichtung sieht vor, daß ein Lese- bzw. Schreibzugriff von der Bridge, die in diesem Ausführungsbeispiel die erste Schaltungsanordnung 1 ist, auf dem ersten Kommunikationsbus 2 innerhalb von zwei Takten durchgeführt wird. Das Wait-Signal 11, welches von der zweiten Schaltungsanordnung 4 an deren ersten Ausgang 5 generiert wird, ist mit der ersten Schaltungsanordnung 1 über den Eingang 6 verbunden, so daß die zweite Schaltungsanordnung 4 einen Schreibzugriff bzw. einen Lesezugriff der ersten Schaltungsanordnung 1 mittels des Wartesignals 11 auf beliebig viele Takte verlängern kann.

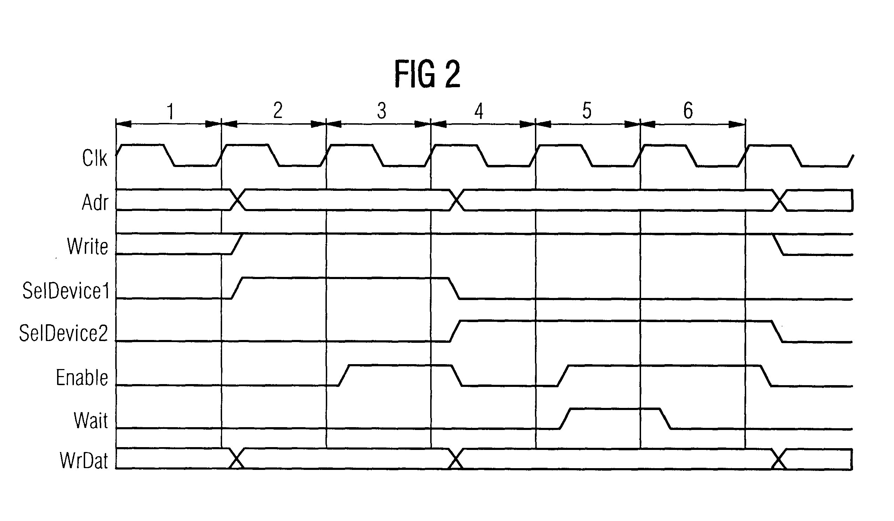

In Figur 2 ist ein Timing-Diagram für einen Zugriff der ersten Schaltungsanordnung 1 auf den ersten Kommunikationsbus 2 dargestellt. In diesem Ausführungsbeispiel ist speziell das Protokoll des APB-Bus (Revision E, Dokument Nr. ARM IHI 0009A Firma ARM) dargestellt. In der obersten Zeile ist das Taktsignal CLK (Clock) dargestellt, das innerhalb der durchnumerierten Takte 1 bis 6 jeweils eine Periode aufweist. Ein Schreibvorgang auf dem ersten Kommunikationsbus 2 beginnt zum Beispiel in dem zweiten Takt mit dem Anlegen der Adresse ADR, dem Signalisieren eines Schreibprozesses mit dem Signal WRITE, das durch einen High-Pegel angezeigt wird, durch die Auswahl eines ersten Peripheriegerätes mittels der Leitung SELDEVICE1 und dem Präsentieren der Daten WRDAT. In dem dritten Takt, der den zweiten Takt des Schreibsignals darstellt, wird durch das Signal ENABLE das Bereitstehen der Daten angezeigt. Nach Beenden des dritten Taktes ist die Datenübertragung abgeschlossen. In dem vierten bis sechsten Takt ist ein zweiter Schreibprozeß dargestellt, der sich von dem ersten Schreibprozeß dahingehend unterscheidet daß in diesem Fall ein anderes Peripheriegerät mittels der Leitung SELDEVICE2 ausgewählt wurde, wobei das erste Peripheriegerät mittels der Leitung SELDEVICE1 nicht mehr selektiert ist. Der Schreibprozeß ist in diesem Fall auf drei Takte verlängert, da in dem mittleren Takt (Takt 5) von der zweiten Schaltungsanordnung 4 ein Wartesignal 11 über die Leitung WAIT an die erste Schaltungsanordnung 1 übermittelt wurde. Das Vorhandensein des Signals WAIT kann den entsprechenden Schreibprozeß auf eine beliebige Anzahl von Taktzyklen ausdehnen.

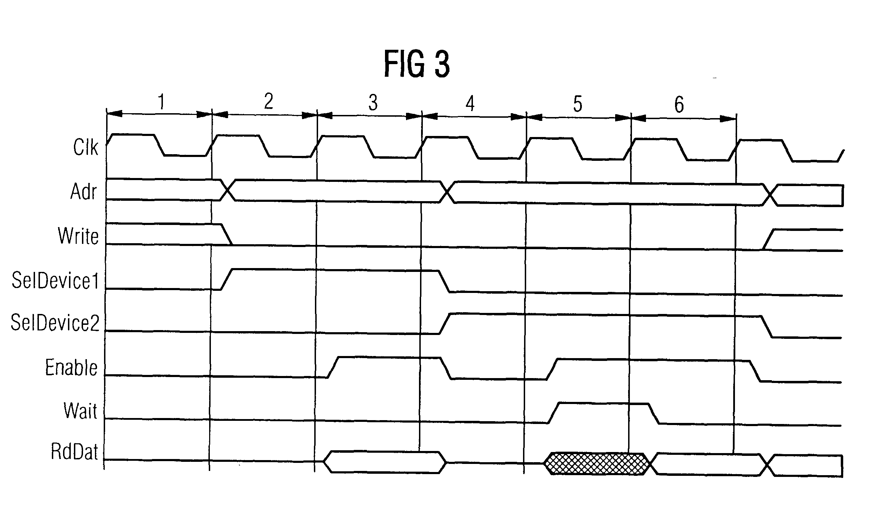

Mit Bezug auf Figur 3 ist ein Leseprozeß der ersten Schaltungsanordnung 1 auf dem ersten Kommunikationsbus 2 dargestellt. Das Timing-Diagram in Figur 3 unterscheidet sich von dem Timing-Diagram aus Figur 2 in der Durchführung von Leseprozessen, da in den Zeitfenstern 2 bis 6 das Signal WRITE low ist. Die Datenleitungen RDDAT in dem Zeitfenster 5 sind nicht gültig, da zu diesem Zeitpunkt das Signal WAIT high ist und damit ein Wartesignal 11 von der zweiten Schaltungsanordnung 4 an die erste Schaltungsanordnung 1 übermittelt wird und anzeigt, daß die zweite Schaltungsanordnung 2 noch nicht zu der Übermittlung der Daten bereit ist.

## Patentansprüche

1. Datenverarbeitungseinrichtung mit:
- einer ersten Schaltungsanordnung (1), die einen ersten Kommunikationsbus (2) mit einem zweiten Kommunikationsbus (3) verbindet und der Busmaster des ersten Kommunikationsbusses (2) ist;
- einer zweiten Schaltungsanordnung (4), die mit dem ersten Kommunikationsbus (2) verbunden ist,
**dadurch gekennzeichnet,daß**
die zweite Schaltungsanordnung einen ersten Ausgang (5) aufweist, der mit einem Eingang (6) der ersten Schaltungsanordnung (1) verbunden ist.

2. Anordnung nach Anspruch 1,
**dadurch gekennzeichnet, daß**
eine dritte Schaltungsanordnung (7) angeordnet ist, die einen zweiten Ausgang (8) aufweist, der mit dem ersten Ausgang (5) mittels einer logischen ODER-Funktion (9) verknüpft ist, wobei der Ausgang (10) der ODER-Funktion (9) mit dem Eingang (6) der ersten Schaltungsanordnung (1) verbunden ist.

3. Anordnung nach einem der Ansprüche 1 oder 2,
**dadurch gekennzeichnet, daß**
die erste Schaltungsanordnung (1) und die zweite Schaltungsanordnung (4) separate integrierte Schaltungen sind, die von dem ersten Kommunikationsbus (2) verbunden werden, der auf einem Systembord angeordnet ist.

4. Anordnung nach einem der Ansprüche 1 oder 2,
**dadurch gekennzeichnet, daß**
die erste Schaltungsanordnung (1) und die zweite Schaltungsanordnung (4) in einer gemeinsamen integrierten Schaltung angeordnet sind.

5. Verfahren zum Betrieb einer Datenverarbeitungseinrichtung mit den Schritten:
- Bereitstellen einer ersten Schaltungsanordnung (1), die einen ersten Kommunikationsbus (2) mit einem zweiten Kommunikationsbus (3) verbindet und der Busmaste des ersten Kommunikationsbusses (2) ist, wobei eine zweite Schaltungsanordnung (4) mit dem ersten Kommunikationsbus (2) verbunden ist und die zweite Schaltungsanordnung einen Ausgang (5) aufweist, der mit einem Eingang (6) der ersten Schaltungsanordnung (1) verbunden ist,
- Erzeugen eines Wartesignals (11) in der zweiten Schaltungsanordnung (4);
- Übermitteln des Wartesignals (11) von der zweiten Schaltungsanordnung (4) an die erste Schaltungsanordnung (1);
- Warten der ersten Schaltungsanordnung (1) bis die zweite Schaltungsanordnung (4) das Wartesignal (11) beendet.

6. Verfahren nach Anspruch 5,
**dadurch gekennzeichnet, daß**
eine dritte Schaltungsanordnung (7) angeordnet ist, die einen zweiten Ausgang (8) aufweist, der mit dem ersten Ausgang (5) mittels einer logischen ODER-Funktion (9) verknüpft ist, wobei von dem Ausgang (10) der ODER-Funktion (9) das Wartesignal (11) an den Eingang (6) der ersten Schaltungsanordnung (1) gesendet wird, solange eine der Schaltungsanordnungen (4, 7) ein Wartesignal übermittelt.
